# EUROPEAN PATENT APPLICATION

(11) **EP 2 210 494 A1**
(43) Date of publication of application: **28.07.2010**
(21) Application number: 09151270.7
(22) Date of filing: 23.01.2009
(51) Int. Cl.: A22B 5/16, A22C 17/12

(54) **A method and apparatus for removing fat from meat cuts**

(71) Applicant: Slagteriernes Forskningsinstitut, 4000 Roskilde (DK)
(72) Inventor: Black, Per, DK-4100, Ringsted (DK); Lauritzen, Benny, DK-6500, Vojens (DK)
(74) Representative: Nielsen, Kim Garsdal

(57) **Abstract**

A method and apparatus for removing fat from one face of a meat cut (2), where a knife (12) tool cuts a layer of fat (4) and possibly skin (4a) from said face. The knife tool (12) is adapted to cut across the entire width of said meat cut (2) along a desired trimming interface. The knife tool (12) comprises at least two controllable blade parts (13), each comprising a cutting edge (13a), the blade parts (13) extending between said first face and a fat-to-lean interface (22) without intersecting said first face. The position of said cutting edges (13a), is continuously adapted, by controlling said at least two controllable blade parts (13a), to cut following said desired trimming interface, whereby the fat (4) and possible skin (4a) is trimmed from said lean (3) in said one single piece of fat (4).

## Description

### Technical Field

The present invention relates to a method and apparatus for removing or trimming fat from meat cuts.

Many standardised meat cuts, such as several cuts of pork, comprise a layer of subcutaneous fat and possibly the corresponding portion of the animal's skin (e.g. pork rind).

The thickness of a layer of fat on one face of a meat cut, such as subcutaneous fat, may vary considerably over a cut of meat, that is, along the main extension of the meat cut, and transversely to this extension - these two directions generally following the extension of the animal's skin. In such cases, it is necessary to remove a layer of fat having considerable variations in thickness in order to leave a layer of fat on the lean of the meat cut having a generally uniform thickness. Meat cuts having a thin layer of fat with a uniform thickness are in considerable market demand in modern times. However, the removed fat is normally also being utilised as a commercial product. In this respect it is of importance to trim the fat from the lean in one single piece of fat as the commercial value of the fat will otherwise decrease substantially.

Manual trimming of meat cuts in order to obtaining a thin, uniform layer of fat on the lean is quite difficult, and a time-consuming and strenuous work as well. Industrial injuries arising from such work are well known. Moreover manual trimming of the fat in one single piece is difficult.

### Prior Art

Machines are known for removing (trimming) a layer of fat from a meat cut such as a pork side or a pork loin, in which the meat cut is forced along a conveyor and past a knife tool which is stationary in the direction of movement of the meat cut. The knife tool separates a layer of fat and possibly skin from the meat cut. The meat cut is normally conveyed with its fat side or fat-and-skin side facing downwards, usually resting on some form of conveyor.

One machine of this kind is known form US 6,129,625. In this machine a knife tool with a single blade extending across the entire width of the meat cut is used. The thickness of *inter alia* the fat on the meat cut is measured upstream of the knife tool using an ultrasonic or x-ray sensor. The knife tool is continuously adjustable by moving either or both ends of the single blade up and down in order to follow in a desired fashion the fat-to-lean interface of the meat cut while the meat cut is being forced past the knife tool, so that more fat is cut from the lean, or so that a layer of fat having a desired thickness is being left on the lean. The blade may have a predetermined advantageous curvature. Still, however, even with the curvature the performance of this machine leaves very much indeed to be desired when it comes to producing cuts of meat having a layer of fat left on the lean having a uniform or near to uniform thickness.

In another machine known from US 7,001,261, the knife tool consists of four U-shaped knife blade loops, which are not individually deformable but each of which are continuously adjustable in height so that the knife tool viewed as a whole may attain the shape of a stepped curve when viewed in the direction of motion of the meat cut. The adjustment in height of each knife blade loop may be achieved in that the angle of inclination of that loop is adjustable during the cutting process, so that the loop will tend to be lifted upwards or pressed downwards within the layer of fat, as its angle of inclination is increased or reduced, much the way in which an airplane's ailerons function.

Even if this knife tool viewed as a whole is thus adaptable to a certain degree to variations in the fat-to-lean interface, both in the direction of movement of the meat cut and transversely to this direction, each knife blade loop will necessarily cut its own strip of fat from the meat cut, and the removed fat will thus be divided into as many strips as there are knife blade loops in the knife tool. This will adversely reduce the commercial value of the fat.

US 4,246,837 teaches a fat trimming apparatus of the kind mentioned above, in which the thickness of fat is sampled at several positions along the meat cut, at positions distributed in the direction of conveyance and optionally distributed transversely to the direction of conveyance as well. Sampling is made while the meat cut is kept at a standstill. The meat cut is subsequently forced in a horizontal direction past a knife blade in the cutting station, while the knife blade is continuously adjustable in a vertical direction so as to vary the thickness of the layer of fat cut from the lean along the meat cut. It is mentioned that the knife blade may be movable as well so as to vary its inclination, while it remains unclear which direction of inclination is meant.

Instead of continuously adjusting the knife blade in a vertical direction, it is briefly mentioned in US 4,246,837 that the position of the meat cut relative to the knife blade may be adjusted. It is briefly mentioned as well in this paper that the meat cut may be held stationary and the knife tool forced though the fat layer of the meat cut.

### Object of the Invention

The object of the present invention is to provide an improved method and improved apparatus for removing fat from meat cuts, where essentially all subcutaneous fat is removed form the lean of the meat cut, or where a layer of fat having a desired and uniform thickness is left on the lean. It is part of the object that the fat is to be removed as one single piece of fat.

### Summary of the Invention

According to a first aspect of the invention there is provided a method for removing fat from a first face of a meat cut, said meat cut having a length and a width, and said first face extending along said length and said width, the method comprising: estimating the shape and position of a fat-to-lean interface in said meat cut, pressing said first face of the meat cut against a support extending in a direction transverse to a transport path, moving the meat cut in its lengthwise direction along a transport path and past a knife tool having a cutting edge, whereby the knife tool cuts a layer of fat and possibly skin from said first face, the knife tool being adapted to cut across the entire width of said meat cut so as to allow the trimming of the fat with possible skin from the rest of the meat cut as one single piece of fat, the method being characterized in determining, based on said estimated shape and position of a fat-to-lean interface, a desired trimming interface extending along the length and width of said meat cut, providing a knife tool comprising at least two controllable blade parts, each blade part having a cutting edge, the blade parts extending between said first face and said fat-to-lean interface without intersecting said first face, and continuously adapting, by controlling said at least two controllable blade parts, the position of said cutting edges to cut following said desired trimming interface, whereby the fat with possible skin is trimmed from said lean as said one single piece of fat.

According to a second aspect of the invention there is also provided an apparatus for removing fat from a first face of a meat cut, said meat cut having a length and a width, and said first face extending along said length and said width, said apparatus comprising: conveying means for moving the meat cut along a transport path, a support extending in a direction transverse to a transport path, wherein said conveying means is adapted for moving the meat cut in its lengthwise direction along said transport path and past a knife tool with a cutting edge whereby the knife tool cuts a layer of fat and possibly skin from said first face, the knife tool being adapted to cut across the entire width of said meat cut so as to allow the trimming of the fat and possible skin from the rest of said meat cut as one single piece of fat, the apparatus being characterized in further comprising means for determining, based on an estimated shape and position of a fat-to-lean interface, a desired trimming interface extending along the length and width of said meat cut, a knife tool comprising at least two controllable blade parts, each comprising a cutting edge, the blade parts extending between said first face and said fat-to-lean interface without intersecting said first face, means for continuously adapting, by controlling said at least two controllable blade parts, the position of the cutting edges to cut following said desired trimming interface, whereby the fat and possible skin is trimmed from said lean as said one single piece of fat.

By providing a machine having means for determining, based on an estimated shape and position of a fat-to-lean interface, a desired trimming interface extending along the length and width of said meat cut, a knife tool comprising at least two controllable blade parts, each comprising a cutting edge, the blade parts extending between said first face and said fat-to-lean interface without intersecting said first face, means for continuously adapting, by controlling said at least two controllable blade parts, the position of cutting edges to cut following said desired trimming interface, , it becomes possible to cut the fat from the lean in essentially one piece, while at the same time leaving a relatively constant and desired thickness of fat on the lean. This is desirable as the thickness of fat on the lean can be controlled closely to what the consumer will tolerate, thus ensuring a high market value of both the fat and the lean. At the same time the remainder of the fat is cut away in one piece, which in turn ensures a higher market price for this part of that fat than could be achieved if it was in several smaller pieces.

According to a first preferred embodiment of the first aspect of the invention said at least two controllable blade parts are so controllable that each cutting edge of said alt least two controllable blade parts may be brought into and away from a position, in which it, together with an adjacent cutting edge, forms a continuous cutting edge, extending exclusively between said first face and said fat-to-lean interface. Experience has shown that even if the various blade parts do not fully constitute a continuous cutting edge, the fat still get trimmed efficiently from the lean in one single piece of fat. Smaller "bridges" of fat left between the piece of lean and the piece of fat have shown to provide no problems, as they are very easily broken.

According to another preferred embodiment of the first aspect of the invention, said at least two controllable blade parts are individually controlled. Individual control provides a good control of the possible shapes of the cutting edges, and thus ample degrees of freedom in the choice of the desired trimming interface.

However, according to another preferred embodiment further blade parts are indirectly controlled. Experience has shown that not all blade parts need to be controlled. By controlling only some blade parts out of a number of coupled blade parts a substantial reduction of the number of actuators and other control mechanisms can be achieved.

According to a further preferred embodiment of the first aspect of the invention said shape and position of the fat-to-lean interface is estimated based on experience values and the dimensions and the weight of the meat cut. The build or bodily constitution of slaughter animals often falls within a limited number of types, and thickness-of-fat distribution data for each type may be registered. The thickness-of-fat distribution for a particular meat cut may then be reproduced with satisfactory precision on the basis of the stored data for its type, together with its size and/or weight. This obviates the need for any elaborate measuring devices for performing measurements with in the meat cut. Instead the external dimensions of the meat cut can be used, and these may be measured in an entirely separate process step.

However, according to an alternative embodiment of the first aspect of the invention said shape and position of the fat-to-lean interface is estimated measuring the thickness of said layer of fat and possibly skin by invasive or non-invasive measuring. This allows a precise and direct measurement to be performed just before the cutting.

According to a preferred embodiment of the first aspect of the invention, the meat cut is moved past the measuring station in a continuous motion. Moving the meat cut past the measuring station in a continuous motion speeds up the process and thus increases the efficiency of the cutting process. Moreover, the measuring station can be made short in the direction of transport.

According to another preferred embodiment of the first aspect of the invention, the support is a roller. Using a roller allows good separation of the fat and lean as one of the parts will follow the roller, e.g. by sticking thereto or under the influence of gravitation, and be directed away from the other part.

According to another preferred embodiment of the first aspect of the invention the shape of the knife tool is adapted by changing the angle between at least two blade parts. A change of the angle instead of a discontinuity in position will aid in avoiding "steps" or "bridges" from the individual cutting edges in the fat remaining on the lean, thus rendering it a more attractive and acceptable appearance to the consumer.

According to a presently more preferred embodiment of the first aspect of the invention, changing the position of the at least two blade parts involves the retraction of the cutting edges of the blade parts relative to said support in the direction of said transport. This is preferred because the retraction of the blade parts, rather than adjusting them vertically may reduce shear forces in the vertical direction e.g. when moving the cutting edges of the blade parts across the direction of motion within the piece of meat being cut.

According to a further preferred embodiment of said first aspect of the invention, said trimming interface essentially coincides with said fat-to-lean interface, whereby all fat is cut from the lean. Fully separating the fat from the lean may increase the value of the lean cut for consumers with a focus on low fat diet, the consumers thus being willing to pay an increased price. Moreover, trimming all fat from the lean by hand is a particularly difficult and time-consuming process, and it is virtually impossible to obtain the fat as a single piece of fat by manual trimming.

According to a first preferred embodiment of the second aspect of the invention, said at least two controllable blade parts are so controllable that each cutting edge of said alt least two individually controllable blade parts may be brought into and away from a position, in which it, together with an adjacent cutting edge, forms a continuous cutting edge, not intersecting said first face, that is , the edge is extending exclusively between said first face and said fat-to-lean interface. Experience has shown that even without a continuous cutting edge the fat still get trimmed efficiently from the lean in one single piece of fat.

According to another preferred embodiment of the second aspect of the invention, said at least two controllable blade parts are individually controllable. Individual control provides a good control of the possible shapes of the cutting edges, and thus ample degrees of freedom in the choice of the desired trimming interface.

According to a further preferred embodiment of the second aspect of the invention, further blade parts are indirectly controllable. By controlling only some blade parts out of a number of blade parts a substantial reduction of the number of actuators and other parts of the control mechanisms can be achieved.

According to different preferred embodiment of the second aspect of the invention, said means for estimating the shape and position of a fat-to-lean interface in said meat cut comprises a database holding records with experience values for shape and position of the fat-to-lean interface for specific dimensions and weight of meat cuts, i.e. of fat thickness distribution in dependency of dimensions and weight of meat cuts. These may then be matched to dimensions and weight of the actual piece of meat to be processed. Thus, the need for any elaborate measuring devices for performing measurements with in the meat cut is obviated. Instead the external dimensions of the meat cut can be used, and these may be measured in an entirely separate process step.

However, according to an alternative embodiment according to the second aspect of the invention, the apparatus comprises a measuring station for measuring the thickness of said layer of fat and possibly skin. This allows a precise and direct measurement to be performed just before the cutting, rather than just relying on experience values, which in turn allows a more precise cutting.

According to a preferred embodiment of the second aspect of the invention the apparatus is adapted to move the meat cut past the measuring station in a continuous motion. Moving the meat cut past the measuring station in a continuous motion speeds up the process and thus increases the efficiency of the cutting process. Moreover, the measuring station can be made short in the direction of transport.

According to another embodiment of the second aspect of the invention the support is a roller. Using a roller allows good separation of the fat and lean as one of the parts will follow the roller under the influence of gravitation immediately after the cutting and be directed away from the other.

According to a further embodiment of the second aspect of the invention the apparatus has means for changing the angle between at least two blade parts. A change of the angle will aid in avoiding steps from the individual cutting edges in the remaining fat on the lean, thus rendering it a more attractive and possibly acceptable appearance to the consumer.

According to a further embodiment of the second aspect of the invention the apparatus has means for retracting the cutting edge of at least some of blade parts relative to said support in the direction of said transport. This is preferred because the retraction of the blade parts, rather than adjusting them vertically may reduce shear forces in the vertical direction e.g. when moving the cutting edges of the blade parts crosswise the direction of motion within the piece of meat being cut.

The invention will now be described in more detail based on exemplary embodiments and with reference to the drawings, on which:
Fig. 1 schematically shows meat cuts in a fat removing machine according to the invention,
Fig. 2 schematically shows details of the middle section of the fat removing machine of fig. 1,
Fig. 3 schematically shows essential components of the middle section in Fig. 2 and a meat cut being processed,
Fig. 4 corresponds to Fig. 3, and shows a currently preferred embodiment of the knife tool according to the invention in more detail, without meat,
Fig. 5 schematically shows a vertically movable knife tool,
Fig. 6 schematically shows a knife tool with interconnected blade parts,
Fig. 7a and 7b schematically show configurations of the knife tool of Fig. 6 as seen in the direction of the arrow VII in Fig. 6,
Fig. 8 schematically shows a first knife tool having only one blade part,
Fig. 9 schematically shows a second knife tool having only one blade part,
Fig. 10 schematically shows a third knife tool having only one blade part,
Fig. 11 illustrates examples of curvatures of the knife tool of Fig. 10,
Fig. 12 schematically shows an end view of a two-bladed knife tool,
Fig. 13 schematically shows a side view of the knife tool of Fig. 12,
Fig. 14 schematically shows a top view of the knife tool of Fig. 12,
Fig. 15 schematically shows an end view of a three-bladed knife tool, and
Fig. 16 schematically shows a top view of the three-bladed knife tool of Fig. 15.

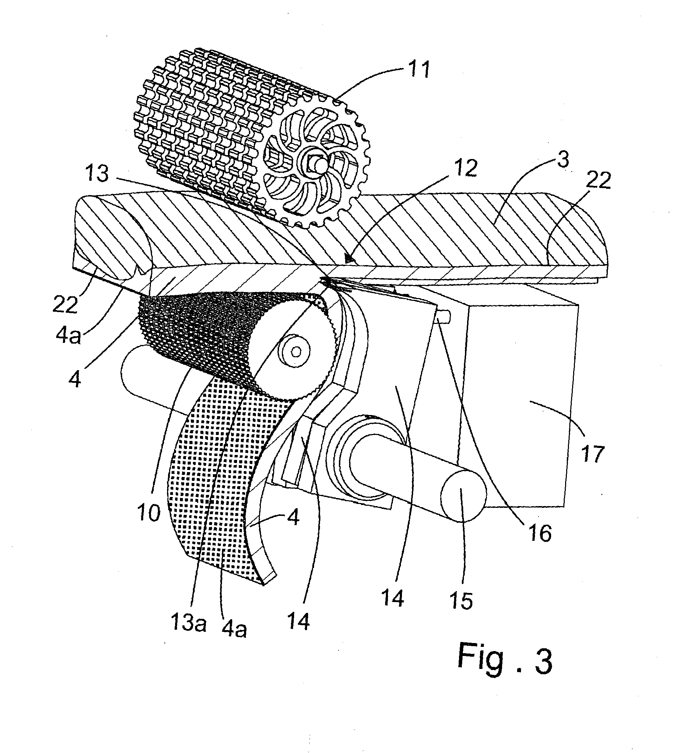

In the drawings, the lean of the meat cut is generally designated by a dense hatching, the fat of the meat cut is designated by a lighter hatching. These hatchings do not designate cross sectioning; all meat cuts are shown in end view, side view or oblique view. The two types of hatching are merely indicating the two types of tissue in the meat cut in the same way as two different colours. In Fig. 3, the rind surface on the first face of the meat cut is designated by a very coarse tint.

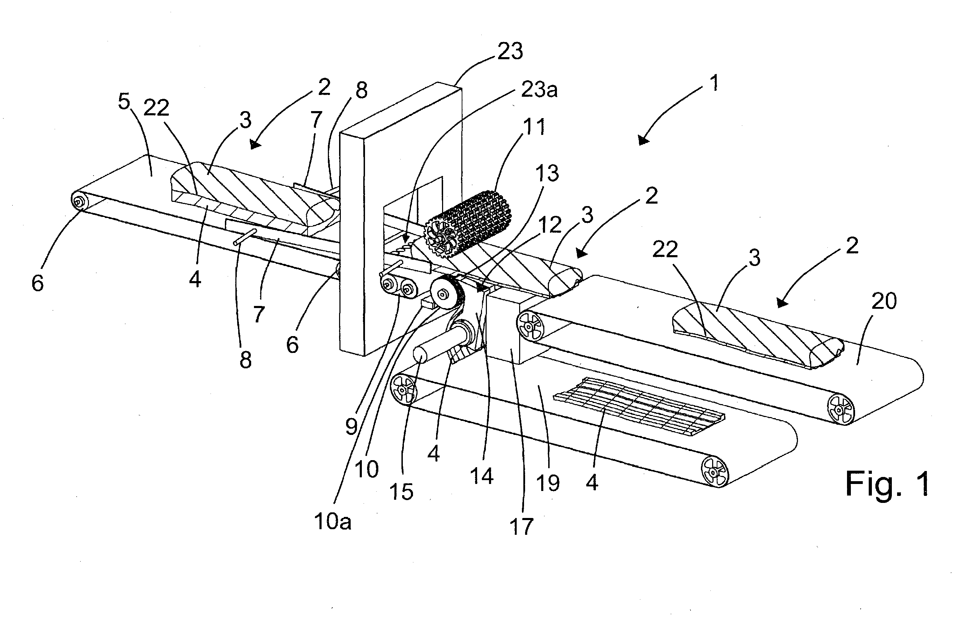

Fig. 1 schematically shows a fat removing machine 1. For illustration purposes, however, only relevant parts are shown. Stationary parts such as framework and support, which are not as such relevant for the invention, have been omitted. In the fat removing machine, a number of meat cuts 2, such as pork loin, are shown. As can be seen, one meat cut 2 is being processed and is already partially separated into two parts, namely into a lean part 3 and a fat part 4.

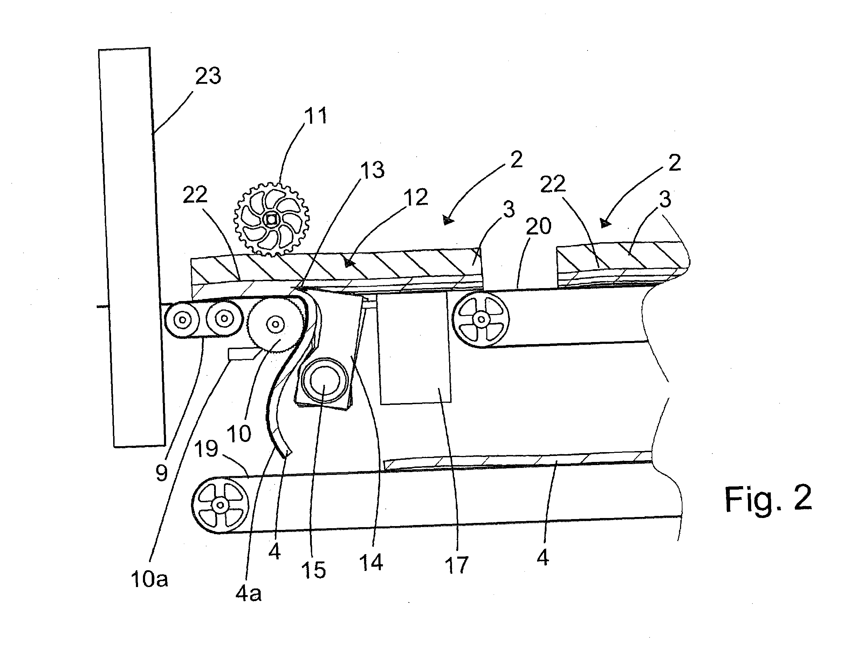

Though referred to as a fat part 4, the skilled person will know that the fat part to be separated from the lean part may often also include a skin part 4a, as e.g. seen in Figs. 2 or 3. Consequently, in the this description the term fat part 4 is to be understood as possibly including a skin part 4a, e.g. the rind, unless otherwise stated.

The fat removing machine 1 comprises an upstream conveyor for bringing the meat cuts 2 to the cutting section of the fat removing machine 1. In the illustrated embodiment this conveyor is a conveyor belt 5, running as an endless belt over a number of rollers 6, here two rollers 6. The skilled person will know that other types of conveyors may be used instead.

For positioning the meat cuts 2 in the sideways direction across the conveyor belt 5 a pair of guide plates 7, which are controlled and supported via guide plate bars 8 are placed at least partially over the conveyor belt 5. From the conveyor belt 5 the meat cuts pass via a measuring station 23 onto an intermediate conveyor, in the present embodiment also a conveyor belt 9. The conveyor belt 9 is shorter but may otherwise correspond in construction to the conveyor belt 5. After the intermediate conveyor belt 9, the meat cuts enter the nip between a toothed traction roller 10, which is rigid, and a resilient traction roller 11. The toothed traction roller 10 and the resilient traction roller 11 grip the meat cut 2 with sufficient engagement force to press it past a knife tool 12 (best seen in Figs. 2 to 4). In the embodiment shown, the knife tool 12 comprises a number of blade parts 13 mounted in individually controllable blade part supports 14 and having cutting edges 13a (not visible in Fig. 1).

The individually controllable blade part supports 14 are controlled in response to measurements made in the measuring station 23. Preferably, in the measuring station 23 measurements of the thickness of the fat 4 are made at appropriate points across the width and along the length of the meat cut 2, e.g. using a number of discrete measuring devices 23a as illustrated in Fig. 1. The skilled person will understand that this is merely an illustrative example, and that the number and location of measuring devices may differ, or even be not visible if, as will be described further below, a CT-scanner is used. These measurements, which represent an estimate of the three-dimensional shape of a fat-to-lean interface 22, as well as the location or position thereof, are then stored and subsequently used for the control of the knife tool 12, i.e. the position of the cutting edges 13a of the blade parts 13 are controlled in dependence of the measurements. In this respect, it should be noted that with a sufficient number of measurements, each with a high degree of precision, the estimate may for all practical purposes be equated to an actual determination of the location of the thee dimensional fat-to-lean interface as well as the shape thereof. Alternatively, measurements of other characteristics of the meat cut 2, e.g. the external dimensions and weight are made, and used for identifying, in a database, typical values, i.e. experience values, of the distribution of the thickness of the fat 4 and thus the curvature and position of the fat-to-lean interface 22. In that case these typical values are then used for the control of the knife tool 12.

Alternatively, combinations may be utilized of a lower number of actual measurements and stored values from a database. The skilled person will be able to point to a strategy for this on the basis of the present disclosure.

During cutting, the toothed traction roller 10 serves as a support for the meat cut 2 providing a well-defined position of the rind face 4a of the meat cut, and thus of the fat-to lean interface. As can be seen from Fig. 1 the toothed traction roller 10, and thus the support, extends essentially linearly in the direction perpendicular to the lengthwise direction of the transport path and exceeds the width of the meat cut 2, allowing it to serve as a reference for the control of a knife tool 12.

Associated with the toothed traction roller 10 there may be a likewise toothed scraper bar 10a, which scrapes rind debris from the toothed traction roller 10. Such toothed traction rollers 10 and scraper bars 10a, as well as resilient traction rollers 11, are well known *per se.*

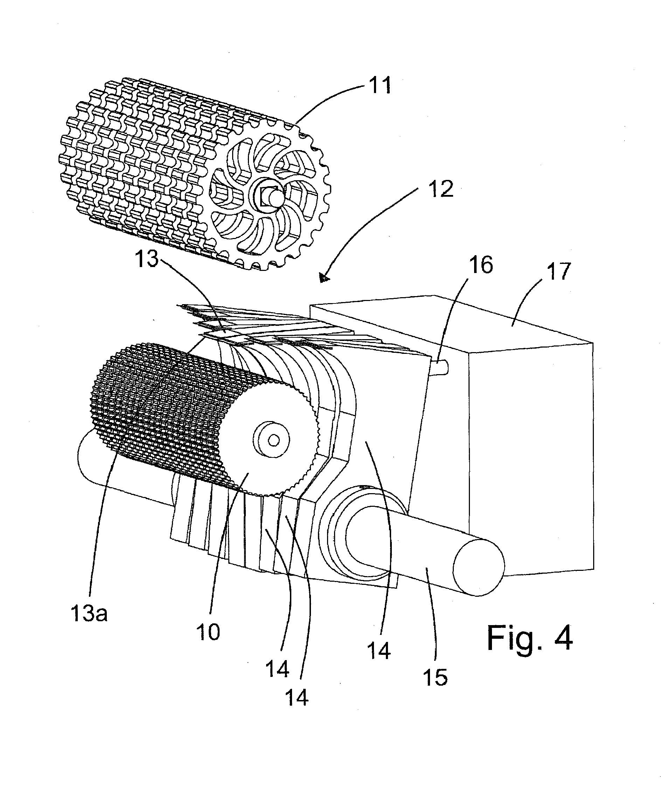

Turning now to Fig. 4, it can be seen that this embodiment of the knife tool 12 comprises a number of blade part supports 14 in which blade parts 13 with cutting edges 13a are mounted. The blade part supports 14 themselves are mounted pivotally on a shaft 15 and controlled individually via control rods 16 (not visible in Fig. 1) by appropriate actuators located in an actuator box 17, so as to allow the actuators to move the blade parts 13 with the cutting edges 13a. The specific type of actuators used is not important for the invention, and could e.g. be spindle actuators, pneumatic or hydraulic actuators, they must however be able to withstand the force necessary to cut the meat, so as not to yield when the meat cut 2 is forced against the blade parts 13 by action of the toothed traction roller 10 and the resilient traction roller 11, and to move the blade part supports 14 at a relevant speed.

As can be seen in Fig. 4, the position of the individual blade part supports 14 and hence the position of the cutting edge 13a of the blade part 13 may be varied with respect to the toothed traction roller 10, so as to increase or decrease the distance from the support provided by the toothed traction roller 10 to each cutting edge 13a. Thus, by individually varying the positions of the blade part supports 14, the thickness of the fat 4 cut from the meat cut may be varied for each blade part, over the entire width of the meat cut 4. Hereby each of the individual cutting edges 13a will not move outside the fat 4, i.e. they will remain inside the space delimited by the first face, here the rind 4a, which is pressed against the toothed traction roller 10, and the fat-to-lean interface 22. This space corresponds directly to the volume of the subcutaneous fat on meat cut 2.

In order to adjust the thickness of the fat to be cut, it suffices to merely adjust the distance of the blade part supports 14, and hence the blade parts 13, from the toothed traction roller 10. This is because the fat 4, in particular the cut away part of the fat 4 will have a tendency to follow the toothed traction roller 10, and the thickness of the fat 4 cut away will therefore mostly depend on the radial distance of the cutting edge 13a from the toothed traction roller 10. The cut away part of the fat 4 will follow the toothed traction roller 10, in part due to gravitation as can be seen in Figs. 1 and 2, where the fat 4 falls down towards a first downstream conveyor belt 19, and in part due to adhesion of the fat part to the roller 10. Though not visible in figs. 1 and 2 there is also a tendency for the fat 4 to stick to the toothed traction roller 10 because of the teeth, which dig into the fat 4 or the rind 4a, as the case may be.

As also seen in Figs. 1 and 2, the separated pieces of fat 4 and lean 3 continue along different paths. As already mentioned, the fat 4 falls downward onto a first downstream conveyor belt 19, by which it is moved out of the fat removing machine 1. The lean 3 on the other hand continues in an essentially horizontal motion over the blade part supports 14 and the actuator box 17 onto a second downstream conveyor belt 20 and out of the fat removing machine 1, typically for further manual processing at a station at the end of the second downstream conveyor belt 20.

With respect to the pivotal motion of the blade part supports 14 it should be noted that this motion not only involves a retracting or approaching motion of the cutting edges 13a of the blade parts 13 away from and towards the toothed traction roller 10 in the direction of transport, but also to some degree involves a motion in the vertical direction. However, with appropriate arrangement of the blade part supports 14 this latter motion is minute and does not really play a role for the actual radial distance as compared with the retracting or approaching motion in the horizontal direction. Moreover, despite the fact that bridges of fat 4 not severed from the lean 3 could be expected, because of the abrupt position differences between adjacent cutting edges 13a, experiments have shown that the fat 4 is still separated from the lean 3 in one piece across the entire width of the meat cut 4. That is to say, the discontinuities between the cutting edges 13a of the individual blade parts 13 are not so big that the local absence of a cutting edge leaves interconnecting bridges between the fat 4 and the lean 3. Consequently, despite the minor discontinuities the cutting edges 13a of the knife tool 12 can be regarded as providing a practically continuous cutting edge across the entire width of said meat cut, thereby allowing the fat 4 to be trimmed from the from the lean 3 as one single piece of fat 4.

Having estimated the shape of the fat-to-lean-interface 22 in the meat cut, it is, with appropriate control, e.g. by means of a computer, of the actuators, possible during cutting to continuously adjust the individual positions of the cutting edges 13a of the blade parts 13 to generally follow the shape of the fat-to-lean-interface 22 at a desired distance. Thus an almost uniform thickness of the layer of fat 4 remaining on the lean 3 is provided. How closely the shape of the fat-to-lean-interface 22 can be followed depends *inter alia* of the number of blade part supports 14 and the width of the cutting edges 13a of the blade parts 13 mounted thereon. Evidently, a large number of narrow blade parts 13 will allow for a higher precision, albeit at the expense of complexity. In this respect, it should be noted that not all of the cutting edges 13a of the blade parts 13 need to have the same width. Complexity can be reduced by using wider cutting edges 13a at locations where the fat-to-lean-interface 22 is generally parallel with the support provided by the toothed traction roller 10. In some meat cuts 2, e.g. depending on the type of cut, the fat-to-lean surface may be flat over larger areas, and without major discontinuities. In such cases only a few blade parts will be necessary to achieve sufficient precision. Neither do the cutting edges 13a have to be horizontal.

Instead of the pivotal arrangement of the blade part supports 14, the skilled person will understand that other arrangements of the blade part supports 14 may be used instead. One such arrangement would be linearly movable blade part supports 14, e.g. only performing a sliding motion in the direction of transport of the meat cuts 2, thereby performing an approaching or retracting motion with respect to the toothed traction roller 10, i.e. without any vertical raising or lowering of the blade part supports 14 and the blade parts 13 mounted thereon. As previously mentioned, even a horizontal motion will suffice because of the tendency of the fat 4 to follow the toothed traction roller. Thus also a horizontal motion of a cutting edge 13a of a blade part 13 with respect to the toothed traction roller 10 will increase the radial distance.

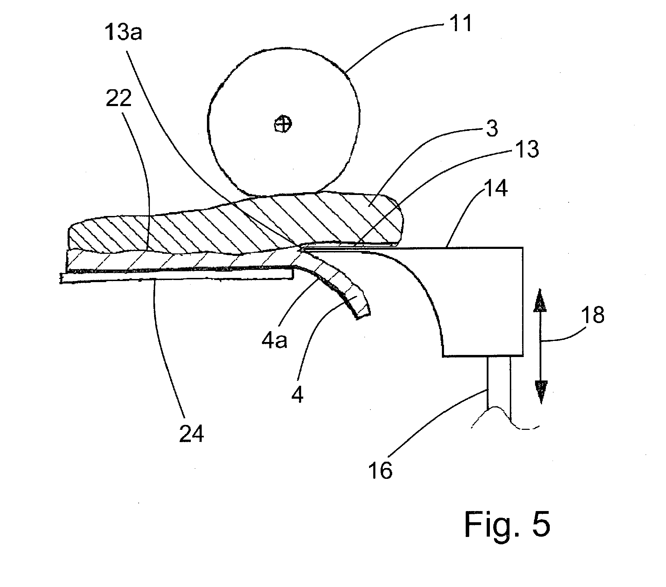

Alternatively, as shown in Fig. 5, linearly movable blade part supports 14 could be used, performing a sliding motion in the vertical direction only, i.e. perpendicular to the direction of transport of the meat cut 2 as indicated by the double arrow 18. In Fig. 5 this is shown in conjunction with a rigid stationary support surface 24 along which the meat cut 2 is moved by the traction roller 11. The skilled person will however realise that this arrangement, where the sliding motion is performed vertically, would also work in conjunction with the toothed traction roller 10, just like he would understand that both of these support arrangements, i.e. a rigid stationary support surface 24 or a rigid rotating toothed traction roller 10 will work with the different knife arrangements described below.

Even if, in the above embodiments the position of each individual blade part 13 and hence the cutting edge 13a thereof is controlled directly by a respective actuator, experience has shown that this is not absolutely necessary for the invention. Rather, the blade parts 13 may be coupled in such a way at only some blade parts 13 are controlled directly, and the remainder of the blade parts 13 controlled indirectly via their coupling to the directly controlled ones.

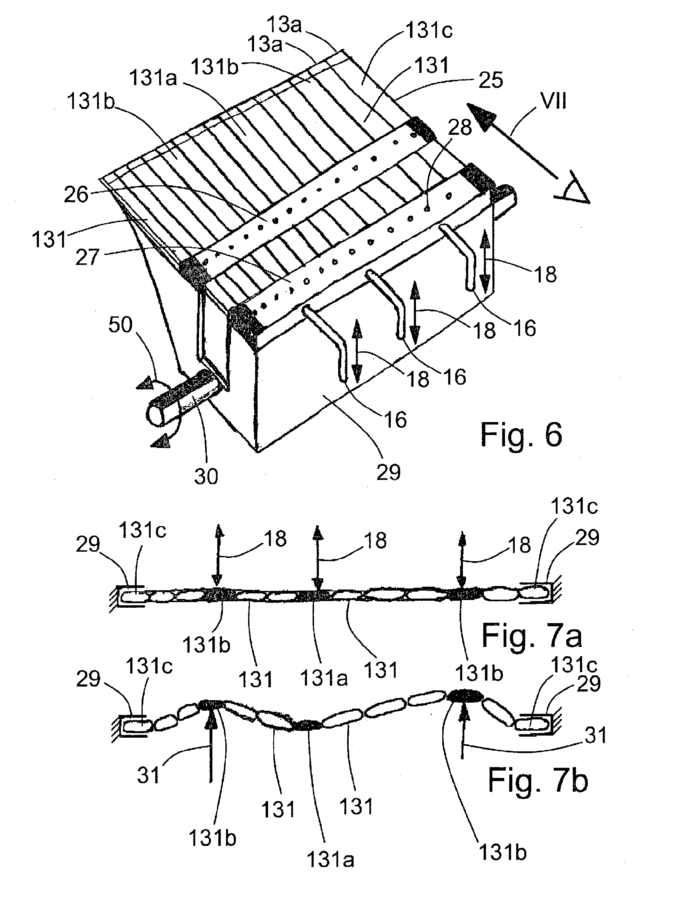

Thus in Fig. 6 there is shown a knife tool 12 where blade parts 131, 131a, 131b, 131c are arranged side by side and linked to form a flexible band 25. In the illustrated example, the blade parts 131, 131a, 131b, 131c are interconnected by means of two elastic ribbons 26, 27 such as rubber ribbons 26, 27, to which they are fastened by a suitable method such as by rivets 28. The ends of the elastic ribbons 26, 27 are connected to a common blade part support block 29. If desired, the blade part support block 29 may be swingable about an axis defined by a shaft 30 in the directions of the double arrow 50. Three blade parts 131a, 131b are connected to control rods 16 allowing them to be moved vertically by means of actuators (not shown) in the directions of the double arrows 18 shown in Fig. 7a, which schematically shows the connected blade parts 131, 131a, 131b, 131c in an end view, as viewed in the direction of VII in Fig. 6. The control rods 16 are hereby moved in the corresponding directions 18 in Fig. 6. As can be seen from Fig. 7b, a desired overall curvature of the knife tool 12 comprised by the blade parts 131, 131a, 131b, 131c can be achieved, e.g. as illustrated by holding one controlled blade part 131a stationary, and moving the other two controlled blade parts 131b upwards as indicated by arrows 31, while the edges of the outermost blade parts 131c are kept stationary by the common support block 29. Because of the rubber ribbons 26, 27 neighbouring blade parts will be elastically linked and thus have a tendency to minimise the angle and distance between them. Thereby the overall arrangement can be given a desired curvature in a nearly continuous way with a precision suitable for the cutting purposes of the invention. Given the right curvature, the overall vertical position can be controlled by swinging the entire common control block 29 in the directions of the arrow 50 using the shaft 30.

Instead of using a number of elastically linked blade parts and a few actuators, more actuators could be used and the blade parts could be linked in a non-elastic way. E.g. there could be half as many actuators as blade parts 131, each actuator controlling every second blade part 131.

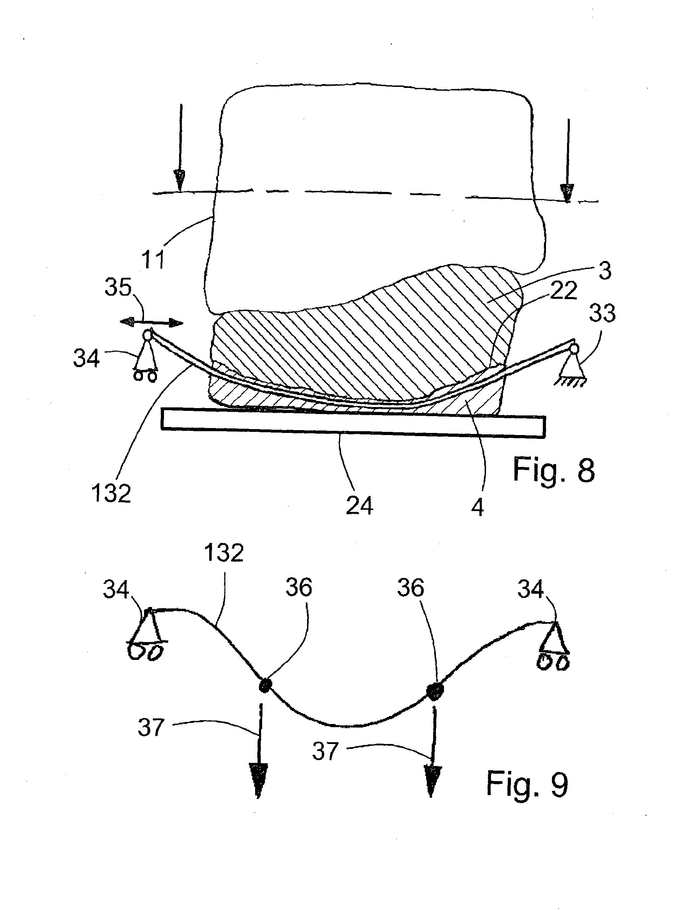

As a further preferred alternative, a knife tool 12 comprising a single flexible blade part 132 only could be used, as schematically illustrated in Fig. 8, with references to the elements of Fig. 1.

In that case there would be provided an apparatus for removing fat from one face of a meat cut 2, said meat cut 2 having a length and a width and a first face extending along said length and said width, said apparatus comprising: conveying means for moving the meat cut 2 along a transport path, means 23 for estimating the shape of a fat-to-lean interface 22 in said meat cut, a support extending 24 essentially linearly in a direction perpendicular to the transport path, means for moving the meat cut 2 in its lengthwise direction along said transport path and past a knife tool with a cutting edge whereby the knife tool cuts a layer of fat 4 and possibly skin from said first face, the knife tool being adapted to cut across the entire width of said meat cut, so as to allow the trimming of the fat 4 and possible skin from the rest of said meat cut 2 as one single piece of fat 4, the apparatus being characterized in means for determining, based on said estimated shape of a fat-to-lean interface 22, a desired trimming interface extending along the length and width of said meat cut 2, a knife tool comprising at least one controllable blade part 132 comprising a cutting edge, said blade part 132 extending between said first face and said fat-to-lean interface 22 without intersecting said first face, and means for continuously adapting, by controlling said at least one controllable blade part 132, the position of the cutting edge to cut following said desired trimming interface, whereby the fat 4 and possible skin is trimmed from said lean in said one single piece of fat 4.

Such an apparatus would be applicable in a method for removing fat from a first face of a meat cut 2, said meat cut having a length and a width, and said first face extending along said length and said width, the method comprising: estimating the shape of a fat-to-lean interface 22 in said meat cut 2, pressing said first face of the meat cut against a support 24 extending in a direction perpendicular to the transport path, moving the meat cut 2 in its lengthwise direction along a transport path and past a knife tool having a cutting edge, whereby the knife tool cuts a layer of fat 4 and possibly skin from said first face, the knife tool being adapted to cut across the entire width of said meat cut, so as to allow the trimming of the fat 4 with possible skin from the rest of the meat cut 2 as one single piece of fat 4, the method being characterized in determining, based on said estimated shape of a fat-to-lean interface 22, a desired trimming interface extending along the length and width of said meat cut 2, providing a knife tool comprising at least one controllable blade part 132 having a cutting edge, said blade part 132 extending between said first face and said fat-to-lean interface 22 without intersecting said first face, and continuously adapting, by controlling said at least one controllable blade part 132, the position of said cutting edge to cut following said desired trimming interface, whereby the fat 4 with possible skin is trimmed from said lean as said one single piece of fat 4.

More specifically in the embodiment illustrated in Fig. 8, the single flexible blade part 132 is mounted at its ends in an appropriate way, e.g. hinged to a fixed support 33 at one end and hinged to a movable support 34 at the other end. As shown, the movable support 34 is linearly movable in the directions of the double arrow 35 under the force of e.g. an actuator. Thus, by application of a force, the support 34 may be moved to change the curvature of blade part 132. It could moreover be envisaged that the movable support 34 is adapted to apply a torque to the end of blade part 132, i.e. at the connection point, so as to bend the single flexible blade appropriately. Evidently, also a combination of force and torque could be used.

Alternatively, as schematically shown in Fig. 9, the single flexible blade part may be rigidly connected to moveable supports 34 at both ends and connected to vertically operating actuators at appropriate points 36 in-between the edges as indicated with arrows 37. It should be noted that more than two actuators attached to respective points 36 could be used. Thus, the overall curvature of the cutting edge 13a of the knife tool 12 may be varied in a way somewhat similar to the functioning of the elastically linked blade parts 131, 131a, 131b, 131c of Fig. 6.

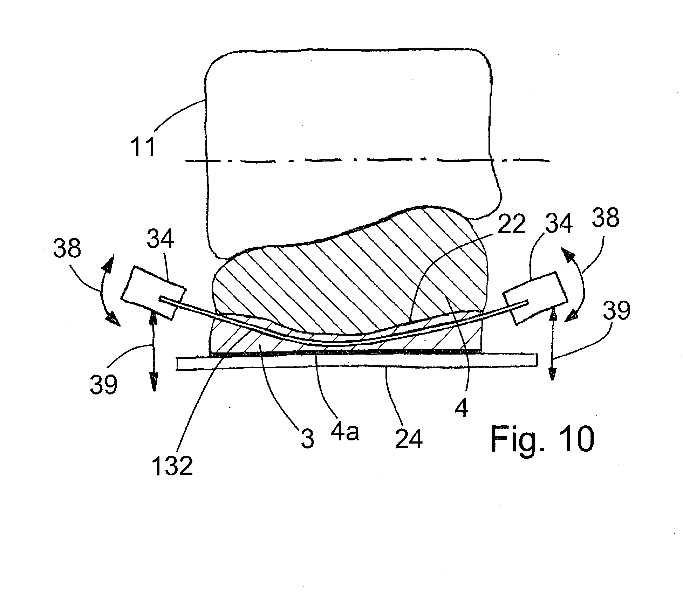

One particularly advantageous embodiment of a knife tool 12 using only a single flexible blade part 132, is shown in Fig. 10. Here the respective ends of a single flexible blade part 132 are mounted in movable supports 34 in a rigid manner. The movable supports 34 are adapted to apply a torque to the end of the blade part 132, in order to impart a turning motion indicated with the double arrows 38 on the blade part 132. Moreover, the movable supports 34 are movable in the vertical direction, as indicated by the double arrows 39. In order to compensate for variations in the horizontal length of the blade part 132, one or both of the supports 34 may be resilient in the horizontal direction. With this arrangement, the single flexible blade part 132 may be warped into very different shapes and postions, thus allowing the cutting edge of the blade part 132 to continuously follow the fat-to-lean-interface 22.

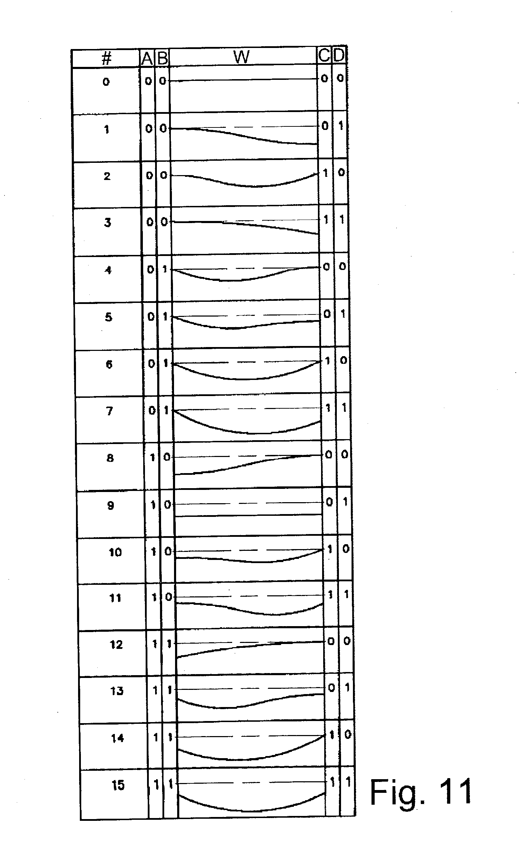

Fig. 11 illustrates various examples of such shapes and positions. In Fig. 11, a '1' in column A indicates that the vertical position of the left-hand end of the blade part 132 is shifted; a '1' in column B indicates that a torque B is applied to the left hand end of the blade part 132; a '1' in column C indicates that a torque C is applied to the right-hand end of the blade part 132; a '1' in column D indicates that the vertical position of the right-hand end of the blade part 132 is shifted. The curves indicated in the column W illustrate the resulting warping of the blade part 132 resulting from the shifts and torques indicated in the corresponding row in columns A, B, C, D. The skilled person will realise that additional curvatures may be achieved by also allowing for a shift of either of the blade ends in the opposite direction, and by the application of a torque in the opposite direction, e.g. corresponding to values '-1' for the torque in columns B and C and values'-1' for the shifting of the ends of the blade part 132 in columns A and D.

In respect of the embodiment of Figs. 8 to 11, it should be noted that the skilled person will readily be able to incorporate any of those features of the other embodiments, which are not specifically dealt with in the description of these Figures above, e.g. features of the conveyors, traction rollers, measuring, actuators, and computer control of the blades etc.

As already mentioned, more or less precision may be needed depending on the meat cut 2 to be processed. Some meat cuts 2 have large almost flat areas of the fat-to-lean-interface 22, possibly having at one end of the meat cut 2 a discontinuity between adjacent surfaces of the fat-to-lean interface 22 as seen in the direction across the width of the meat cut 2.

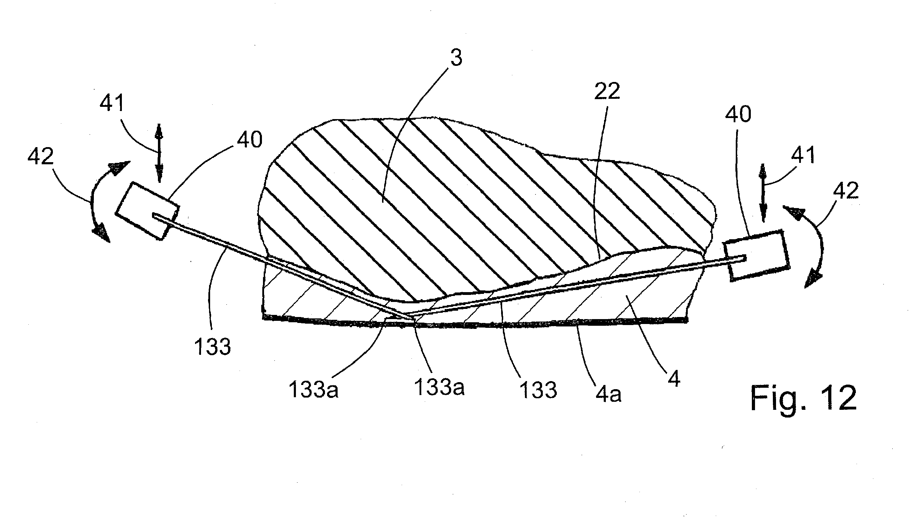

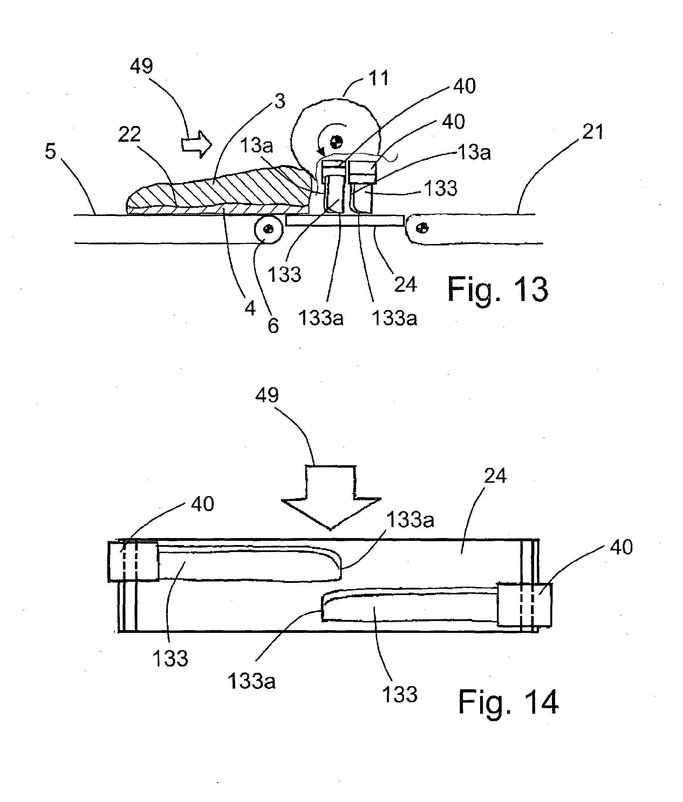

In that case, the embodiment of the knife tool 12 as schematically shown in Figs. 12, 13 and 14 may be advantageous. Here two blade parts 133 are mounted in supports 40. The supports 40 are linearly movable in the vertical direction, as indicated by the double arrows 41 in Fig. 12, as well as swingable as indicated by the double arrows 42. These motions can be achieved by appropriate actuators, which move the supports 40. As can be seen from Fig. 13 the supports are staggered in the direction of transport 49 of the meat cut 2, so as to allow the tips 133a of the blades parts 133 to overlap. Thus, when the meat cut 2 is moved from an upstream conveyor belt 5 over the support 24 in the direction indicated by the arrow 49 in Fig. 14 and forced against the support 24 by means of the resilient traction roller 11, the fat 4 of the meat cut 2 is forced past the blade parts over the entire width of the meat cut 2. At the same time the inclination of the blades is adjusted so that the cutting edges, at least as far as the actively cutting positions are concerned, extend exclusively between the fat-to-lean interface 22 and first face, i.e. the rind 4a, pressed against the support 24 (cf. fig 13). In this embodiment, it is currently preferred to move the fat 4 and the lean 3 together onto a single downstream conveyor belt 21 for further manual processing. The skilled person will realise that this feature is readily applicable in connection with the other embodiments described, as an alternative in the to the separation of fat 4 and lean 3 onto individual conveyors. Optionally, the movable supports 40 may also be movable in the horizontal direction, transversely to the direction of motion 49 with respect to the support 24, be it individually or together.

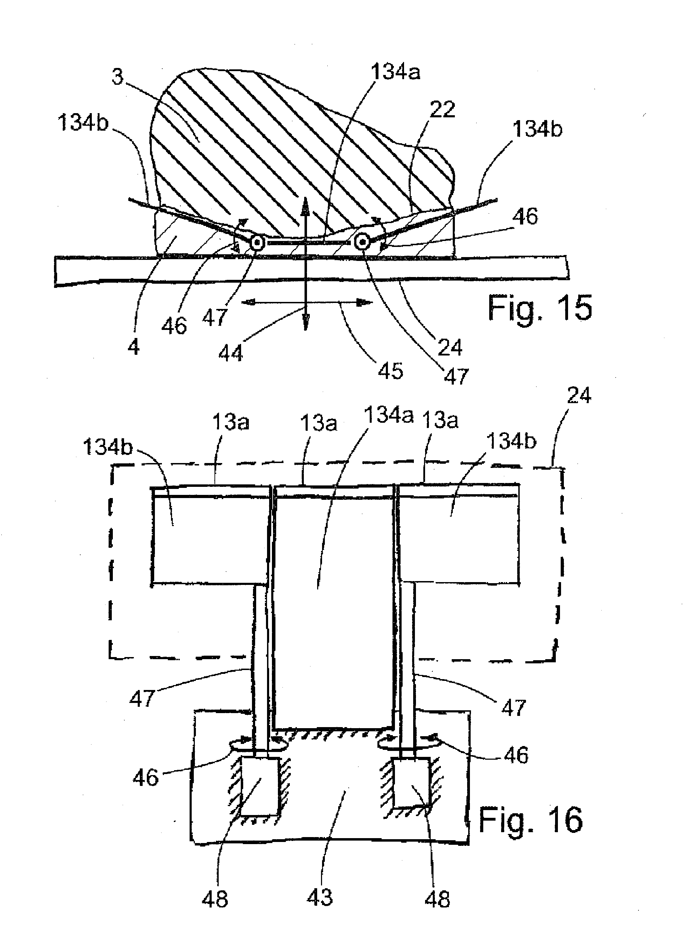

In Fig. 15 a further embodiment of the knife tool 12 is schematically shown. Here the knife tool 12 comprises three blade parts 134a, 134b, which, as can be seen in Fig. 16, are mounted on a common support 43, which is vertically and horizontally moveable as indicated by the double arrows 44 and 45, respectively. In addition to the support being horizontally and vertically movable, the two lateral blade parts 134b are swingable relative to the central blade part 134a as indicated with the double arrows 46. The central blade part 134a is kept in the horizontal position, or it may optionally be tiltable in directions corresponding to directions 46. It is thus possible to continuously adjust the height and the inclination of the blades so that the cutting edges 134, 134b, at least as far as the actively cutting parts are concerned, extend exclusively between the fat-to-lean interface 22 and first face pressed against the support 24. In order to achieve the angular motion, each of the lateral blade parts 13 are mounted on a rotatable shaft 47. Each of the rotatable shafts 47 is rotated by respective actuators 48, which are preferably mounted on the common support 43.

Though not described in conjunction with all of the variations, the skilled person will realise that it will be possible to also allow for the change in the inclination of the cutting edge 13a of the blade part(s) in the direction of transport 49, i.e. to change the angle of attack. Even if this might provide for a cleaner cut and might reduce fiction, such a modification is currently not preferred in order to keep down the complexity of the knife tools 12 and the control mechanisms.

The overall control of the fat removing machine will now be described. For the operation of a fat removing machine 1 of the present invention, appropriate control of the knife tool 12 is necessary, along with appropriate control of the various other mechanical components of the machine.

In general, the elements, such as the conveyors 5, 9, 19, 20, 21, the blade parts 13, 131a, 131b, 132, 133, 134a, 134b, the control rods 16, will be displaced by computer control via suitable actuators and mechanisms. In respect of computer hardware, actuators and mechanisms for displacing the elements 30, etc., the skilled person will be able to point to useful solution details on the background of the present disclosure.

In the embodiments the cutting edges 13a of the knife tools 12 are adjusted to the curvature and position of the fat-to-lean interface 22 inside that particular portion of the meat cut 2, which is present at the knife tool 12 of the fat removing machine 1, i.e. corresponding to the momentary position of the meat cut 2 in the direction of transport.

Information on the shape and position of the fat-to-lean interface 22, as well as information on the position of the meat cut 2 in the direction of transport is thus to be supplied to a control computer in the fat removing machine 1, and the control computer will have to displace the cutting edges of the knife tools accordingly via suitable actuators and mechanisms, such as the control rods 16, the blade part supports 14, the mounting blocks 29, 34, 35, 40, 43 the shafts 30, 47, etc.

In a first embodiment of a computer control system for the fat removing machine 1, the information on the curvature and position of the fat-to-lean interface 22, that is, in general a total mapping of this interface, must preferably be available before the meat cut 2 is fed into the fat removing machine 1. On the basis of this information and on the basis of the momentary position of the meat cut 2 in the direction of transport, the computer control system will generate consecutive sets of data for curvature and position of the fat-to-lean interface 22 as seen in a cross-section of the meat cut 2, taken immediately forward of the knife tool 16. The control computer will then continuously position the relevant elements in accordance with these sets of data.

The mapping of the fat-to-lean interface 22 in a meat cut 2 from which fat is to be removed, i.e. determining the location and shape of the fat-to-lean interface 42 in a meat cut from which fat is to be removed, in order to obtain a map of the interface, may be made at a separate measuring station 23 (shown in Figs. 1 and 2) placed upstream of the fat removing machine 1, and the map data for the entire meat cut 2 may then be transmitted to the machine's control computer for use when the meat cut 2 enters the machine 1. Determining the location and shape of the fat-to-lean interface 42 in a meat cut from which fat is to be removed, in order to obtain a map of the interface, may e.g. be made in a CT-scanning unit placed upstream of the fat removing machine 1, and map data for the entire meat cut 2 may then be transmitted to the machine's control computer for use when the meat cut 2 is treated in the machine 1. CT-scanning has proved to give a very precise mapping, albeit at a large expense, and relevant methods are known.

According to the invention, other methods for mapping the fat-to-lean interface 42 may be used as well. For example, ultra-sound echo technique may be used for mapping the fat-to-lean interface 42. It may in this case be advantageous to remove rind 4a or skin from the first face of the meat cut 2, so that the fat to be removed is exposed prior to measuring the thickness of fat 4. An ultra-sound measuring head is dependent on an intimate contact with the meat cut for transferring the ultra-sound vibration efficiently to and from the meat cut 2, and such contact may by more easily obtained by contacting a fat surface than by contacting a rind 4a or skin surface. The rind 4a often tends to be rather rigid and unyielding whereas the fat 4 may well be quite yielding and compliant, thus providing for a good and efficiently sound-transmitting contact between an ultra-sound transceiver head and the meat cut 2. It may well be undesirable to put sound-transmitting fluid or gel onto the meat cut 2, as is normally used in the field of medicine when using ultra-sound echo measuring equipment on patients.

According to the invention, X-ray reflection technique may alternatively be utilised for mapping the interface 42. X-ray reflection may be used in an echo mode rather the same way as ultra-sound echo technique, where X-rays are emitted towards the first face of the meat cut 2 and reflected from the discontinuity provided by the fat-to-lean interface 42. According to the invention, it is however envisaged that X-rays emitted at an oblique angle towards said first face, and reflected from the interface at a corresponding, oblique angle may yield better results.

As a further alternative, Sub-Surface Laser Scattering technique may be used for assessing the thickness of fat. By this technique, light from a Laser Light Emitting Diode (LED) is emitted towards said first face of the meat cut 2, and light emitted from the surrounding surface is detected or assessed. This technique is known from measuring inter alia turbidity in fluids. As fat and rind are both translucent, the light will penetrate the surface (with or without rind or skin) and will be scattered in the subcutaneous fat so that some of the light will illuminate part of the surface surrounding the point of entrance of the light from the Laser LED. The diameter of the illuminated area and the intensity of the illumination will provide suitable information, from which the local thickness of the layer of subcutaneous fat may be assessed by suitable computation methods.

Alternatively, interface curvature and position information for any section of the meat cut 2 must be available immediately prior to the section of the meat cut 2 arriving at the knife tool 12. The curvature and position of the fat-to-lean interface 22 may then be progressively scanned a short distance upstream of the knife tool 12 of the fat removing machine 1. A scanning unit 23 (Figs. 1-2) for scanning a short section of the meat cut 2 may preferably be arranged in immediate connection with the conveyor belt 9 bringing the meat cut 2 into the middle section of the fat removing machine 1.

If no slip may be expected between the conveyor belt 9 and the meat cut 2, the movement of the conveyor belt 9 may be utilised to indicate the position of the meat cut 2 in the direction of transport. Instead of the conveyor belt 9, e.g. the resilient traction roller 11 or the toothed traction roller 10 may be utilised for indicating position. If slip is to be expected, the position of the meat cut 2 must be detected by separate means.

As an alternative, or in addition to, such scanned data, previously stored data describing a typical thickness-of-fat distribution in a meat cut 2 of the type in question may be used. The build or bodily constitution of slaughter animals often falls within a limited number of types, and thickness-of-fat distribution data for each type may be registered. The thickness-of-fat distribution for a particular meat cut may then be reproduced with satisfactory precision on the basis of the stored data for its type, together with its size and/or weight.

As a further alternative to scanned data, sampled data may be used. If the thickness of fat is sampled in a few points over the face of the meat cut 2 by e.g. ultrasound echo technique, the sample values of fat thickness may be combined with previously stored data to estimate the continuous distribution of the thickness of fat over the entire meat cut. The sampling may be effected in a separate station upstream of the entire fat removing machine 1, or a sampling station 23 with sampling heads 23a may be arranged in connection with the conveyor belt 9. Several techniques of invasive measuring of fat thickness are known, which may also be used, that is, thickness of fat measured by inserting a needle means with optical detector means through the rind of a pork cut, through the fat and into the lean.

According to the invention, data from the measurements made on the meat cut in or upstreams of the fat removing machine 1 may be utilised for subsequent sorting or pre-sorting of the meat cuts 2 from which fat has been removed. The data may be combined or correlated with data from the slaughterhouse's order book so as to obtain a sorting or pre-sorting into different shipments of meat. The measurements made for the purpose of controlling the fat removing machine 1 will be particularly well suited for sorting the meat cut 2 from which fat has been removed, into different classes or for shipment to different customers or markets.

### List of Reference Designations

- 1: fat removing machine
- 2: meat cut
- 3: the lean of the meat cut
- 4: the fat of the meat cut
- 5: conveyor belt
- 6: conveyor belt roller
- 7: guide plate
- 8: guide plate bar
- 9: conveyor belt
- 10: toothed traction roller
- 10a: toothed scraper bar
- 11: resilient traction roller
- 12: knife tool
- 13: blade part
- 13a: cutting edge
- 131: blade part
- 131a: blade part
- 131b: blade part
- 131c: blade part
- 132: blade part
- 133: blade part
- 133a: tip of blade part
- 134a: blade part
- 134b: blade part
- 14: blade part support
- 15: shaft
- 16: control rods
- 17: actuator box
- 18: direction of movement of knife tool
- 19: conveyor belt
- 20: conveyor belt
- 21: conveyor belt
- 22: fat-to-lean interface
- 23: measuring station
- 23a: measuring devices
- 24: stationary support surface
- 25: flexible band
- 26: elastic ribbon
- 27: elastic ribbon
- 28: rivets
- 29: blade part support block
- 30: shaft
- 31: direction of movement of blade part
- 34: movable support
- 35: direction of movement of movable support
- 36: connection points
- 37: direction of movement of movable support
- 38: direction of rotation of movable support
- 39: direction of movement of movable support
- 40: movable support
- 41: direction of movement of movable support
- 42: direction of rotation of movable support
- 43: movable support
- 44: direction of movement of movable support
- 45: direction of movement of movable support
- 46: direction of rotation of shaft
- 47: rotary shaft
- 48: actuator
- 49: direction of transport
- 50: direction of rotation of shaft
- VII: direction of view in Fig. 7

## Claims

1. A method for removing fat from a first face of a meat cut, said meat cut having a length and a width, and said first face extending along said length and said width, the method comprising:
estimating the shape and position of a fat-to-lean interface in said meat cut,
pressing said first face of the meat cut against a support extending in a direction transverse to a transport path,
moving the meat cut in its lengthwise direction along the transport path and past a knife tool having a cutting edge, whereby the knife tool cuts a layer of fat and possibly skin from said first face, the knife tool being adapted to cut across the entire width of said meat cut so as to allow the trimming of the fat with possible skin from the rest of the meat cut as one single piece of fat,
the method being **characterized in**
determining, based on said estimated shape and position of a fat-to-lean interface, a desired trimming interface extending along the length and width of said meat cut,
providing a knife tool comprising at least two controllable blade parts, each blade part having a cutting edge, the blade parts extending between said first face and said fat-to-lean interface without intersecting said first face, and
continuously adapting, by controlling said at least two controllable blade parts, the position of said cutting edges to cut following said desired trimming interface, whereby the fat with possible skin is trimmed from said lean as said one single piece of fat.

2. A method according to claim 1, wherein said at least two controllable blade parts are so controllable that each cutting edge of said alt least two controllable blade parts may be brought into and away from a position, in which it, together with an adjacent cutting edge, forms a continuous cutting edge, extending between said first face and said fat-to-lean interface.

3. A method according to claim 1 or 2, wherein said at least two controllable blade parts are individually controlled.

4. A method according to any one of the preceding claims, wherein further blade parts are indirectly controlled.

5. A method according to any one of the preceding claims, wherein said shape and position of the fat-to-lean interface is estimated based on experience values and the dimensions and weight of the meat cut.

6. A method according to any one of claims 1 to 4, wherein said shape and position of the fat-to-lean interface is determined measuring the thickness of said layer of fat and possibly skin by invasive or non-invasive measuring.

7. A method according to any one of the preceding claims wherein said support is a roller.

8. A method according to any one of the preceding claims, wherein the shape of the knife tool is adapted by changing the angle between at least two blade parts.

9. A method according to claims 2 or 3, wherein changing the position of the at least two blade parts involves the retraction of the cutting edges of the blade parts relative to said support in the direction of said transport path.

10. A method according to any one of the preceding claims wherein said trimming interface essentially coincides with said fat-to-lean interface.

11. An apparatus for removing fat from a first face of a meat cut, said meat cut having a length and a width, and said first face extending along said length and said width, said apparatus comprising:
conveying means for moving the meat cut along a transport path,
a support extending essentially linearly in a direction transverse to the transport path,
wherein said conveying means is adapted for moving the meat cut in its lengthwise direction along said transport path and past a knife tool with a cutting edge whereby the knife tool cuts a layer of fat and possibly skin from said first face, the knife tool being adapted to cut across the entire width of said meat cut so as to allow the trimming of the fat and possible skin from the rest of said meat cut as one single piece of fat,
the apparatus being **characterized in** further comprising
means for determining, based on estimated shape and position of a fat-to-lean interface, a desired trimming interface extending along the length and width of said meat cut,
a knife tool comprising at least two controllable blade parts, each comprising a cutting edge, the blade parts extending between said first face and said fat-to-lean interface without intersecting said first face, and
means for continuously adapting, by controlling said at least two controllable blade parts, the position of the cutting edges to cut following said desired trimming interface, whereby the fat and possible skin is trimmed from said lean as said one single piece of fat.

12. An apparatus according to claim 11, wherein said at least two controllable blade parts are so controllable that each cutting edge of said alt least two controllable blade parts may be brought into and away from a position, in which it, together with an adjacent cutting edge, forms a continuous cutting edge, extending between said first face and said fat-to-lean interface.

13. An apparatus according to claim 11, wherein said at least two controllable blade parts are individually controllable.

14. An apparatus according to any one of claims 11 to 13, wherein further blade parts are indirectly controllable.

15. An apparatus according to any one of claims 11 to 14, wherein said means for estimating the shape of the fat-to-lean interface comprises a database holding experience values of fat thickness distribution in dependency of the dimensions and weight of the meat cut.

16. An apparatus according to any one of claims 11 to 14, comprising a measuring station for measuring the thickness of said layer of fat and possibly skin.

17. An apparatus according to any one of claims 11 to 16 wherein said support is a roller.

18. An apparatus according to any one of claims 11 to 17, said apparatus comprising means for changing the angle between at least two blade parts.

19. An apparatus according to claims 17 or 18, said apparatus comprising means for retracting the cutting edge of at least some of the blade parts relative to said support in the direction of said transport.
